# EUROPÄISCHE PATENTSCHRIFT

(11) **EP 1 893 016 B1**
(45) Veröffentlichungstag und Bekanntmachung des Hinweises auf die Patenterteilung: **13.09.2017**
(21) Anmeldenummer: 06724001.0
(22) Anmeldetag: 04.04.2006
(51) Int. Cl.: A01N 25/04, A01N 25/02, A01N 43/56, A01N 25/30, A01N 43/76, A01N 37/40, A01N 25/32

(54) **WASSER-IN-ÖL SUSPOEMULSIONEN**
WATER-IN-OIL SUSPOEMULSIONS
SUSPOÉMULSIONS EAU-DANS-HUILE

(30) Priorität: 26.04.2005 EP 05009156
(43) Veröffentlichungstag der Anmeldung: 05.03.2008
(73) Patentinhaber: Bayer Intellectual Property GmbH, 40789 Monheim am Rhein (DE)
(72) Erfinder: FRISCH, Gerhard, 61273 Wehrheim (DE); EBERSOLD, Ulrike, 65795 Hattersheim (DE)
(74) Vertreter: BIP Patents
(86) Internationale Anmeldenummer: PCT/EP2006/003044
(87) Internationale Veröffentlichungsnummer: WO 2006/114186

(56) Entgegenhaltungen:
- EP-A- 0 514 769
- WO-A-00/07444
- WO-A-01/30156
- WO-A-99/40784
- WO-A-03/043422

## Beschreibung

Die Erfindung betrifft neuartige Wasser-in-ÖI (W/O) Suspoemulsionen, bestehend aus einer Wasser-Phase in Verbindung mit einer speziellen Öl-Phase. Daneben betrifft die Erfindung auch die neuartige Zusammensetzung der speziellen Öl-Phase als solche.

Suspoemulsionen verschiedener Arten sind beispielsweise beschrieben in EP-A-0117999, US-Patent 4824663, EP-A-0289356, EP-A-0261492, EP-A-0143099 und US-Patent 5518991. Eine Übersicht zu Suspoemulsionen findet sich in Pestic. Sci. 1990, 29, 451 - 465 (Recent Development in Suspoemulsions, P. Mulqueen et al.) und in Pestic. Sci. 1990, 29, 437 - 449 (Trends in the Formulation of Pesticides - An Overview, D. Seaman).

In EP-A-139 4225 werden W/O Verdickerdispersionen beschrieben. Hierbei handelt es sich um flüssige und gießfähige Zubereitungen von einer Wasser-in-ÖI Verdickersuspension, die mindestens ein Verdickungsmittel auf Basis eines synthetischen oder natürlichen Polyelektrolytes enthält, dazu noch ein natürliches Öl wie Rapsöl und ein oder mehrere Emulgatoren und Dispergatoren auf Basis Sorbitanester, Alkylpolyglykosiden, ethoxylierten Fettalkoholen und Wasser.

Bekannt sind auch W/O Emulsionen, wie sie in EP 0244 754 B 1 oder auch in EP 1020 175 B 1 beschrieben werden. Bei der ersteren handelt es sich um W/O Emulsionen bzw. Microemulsionen, bei denen ein salzartiger Wirkstoff wie z.B. Glufosinate in Wasser und ein weiterer Wirkstoff wie z.B. Metolaclor in der Öl-Phase (organische Phase) gelöst ist. Bei der anderen geht es um eine Wasser-in-Öl-in-Wasser (W/O/W) Emulsion unter Verwendung einer Siliconflüssigkeit als Öl-Phase (organische Phase) und eines elastomeren Siliconpolyetheres als Emulgator zur Dispergierung der Wasser-Phase (wässrige Phase).

Im Allgemeinen werden Wirkstoffe nicht als Reinstoffe, sondern je nach Anwendungsgebiet und gewünschter physikalischer Beschaffenheit der Anwendungsform in Kombination mit bestimmten Hilfsstoffen eingesetzt, d.h. sie werden "formuliert". Häufig enthalten derartige Formulierungen anstelle von Einzelwirkstoffen Kombinationen verschiedener Wirkstoffe, um die Eigenschaften der Einzelwirkstoffe bei der Anwendung gemeinsam zu nutzen oder auch weil die Einzelwirkstoffe in der Kombination synergistisch sind, d.h. überadditive Wirkungssteigerungen ergeben.

Daneben ist man bestrebt, eine möglichst hohe Wirkstoffkonzentration ("Beladungsdichte") der jeweiligen Formulierung zu erreichen, da eine hohe Konzentration der Wirkstoffe eine Reduktion der auszubringenden Volumina ermöglicht und folglich Materialeinsparungen im Bereich der mit ausgebrachten Hilfsstoffe, sowie Einsparungen im Verpackungs- und Logistik-Bereich nach sich zieht. Neben einer hohen Wirkstoffkonzentration ist auch eine ausreichend hohe Lagerstabilität einer Formulierung von großer Bedeutung.

Hochkonzentrierte, stabile Formulierungen und Co-Formulierungen mit umweltfreundlichen Hilfsstoffen sind daher von grundsätzlichem Interesse. Zusätzlich bieten Fertigformulierungen, auch sogenannte "ready-to-useformulations", neben der besseren Übersichtlichkeit Vorteile gegenüber Verfahren bei denen die einzelnen Wirkstoffe kurz vor der Anwendung zusammen gemischt werden (sogenannte Tank-Mix-Verfahren). Zu nennen wäre beispielsweise hier, dass Verwechselungen der Einzelwirkstoffe sicher vermieden werden und/oder dass Über- oder Unterdosierungen der Einzelstoffe von vornherein ausgeschlossen sind.

Die Aufgabe der vorliegenden Erfindung bestand darin Fertigformulierungen (readyto-use-formulation) zur Verfügung zu stellen, welche vorteilhafte Eigenschaften aufweisen, vorzugsweise solche Fertigformulierungen mit zwei oder mehreren Wirkstoffen.

Überraschend wurde gefunden, dass die oben genannten Aufgaben vorteilhaft gelöst werden können, durch die erfindungsgemäßen W/O Suspoemulsionen.

Gegenstand der Erfindung ist eine Wasser-in-ÖI-Suspoemulsion, enthaltend
(a) eine Wasser-Phase und
(b) eine Öl-Phase, enthaltend die Komponenten
   (b1) einen oder mehrere agrochemische Wirkstoffe,
   (b2) ein oder mehrere Tenside aus der Gruppe der alkoxylierten Tristyrylphenole, Calciumdodecylbenzolsulfonat und der alkoxylierten C₁-C₂₂ Alkohole, linear und/oder verzweigt,
   (b3) ein oder mehrere organische Trägermedien,
   (b4) ein oder mehrere Verdickungsmittel aus der Gruppe modifizierter natürlicher Silikate und synthetischer Silikate, sowie auf Basis synthetischer Polymere, natürlicher Polymere und natürlicher Öle,
   (b5) gegebenenfalls übliche Hilfs- und Zusatzstoffe.

Vorzugsweise enthält die Wasser-Phase (a), neben Wasser, die Komponenten
(a1) ein oder mehrere ionische Tenside aus der Gruppe Polycarboxylate, N-Alkyl-Tauride, vorzugsweise N-(C₁-C₁₂)-Tauride, besonders bevorzugt N-Methyl-Tauride, und Ligninsulfonate, sowie Calciumdodecylbenzolsulfonate,
(a2) ein oder mehrere Salze,
(a3) gegebenenfalls einen oder mehrere agrochemische Wirkstoffe,
(a4) gegebenenfalls weitere, von Komponente (a1) verschiedene Tenside,
(a5) gegebenenfalls übliche Hilfs- und Zusatzstoffe.

In einer bevorzugten Ausführungsform sind in der Wasser-in-ÖI-Suspoemulsion mindestens zwei Wirkstoffe enthalten, von denen mindestens einer in dispergierter Form vorliegt. Dabei ist einer der Wirkstoffe dispergiert in der Öl-Phase (b) und die anderen Wirkstoffe sind dispergiert und/oder gelöst, in der Öl-Phase (b) und/oder in der Wasser-Phase (a).

Gegenstand der Erfindung ist sowohl die W/O Suspoemulsion sowie deren spezielle Öl-Phase (b). Die erfindungsgemäße W/O Suspoemulsion kann hierbei sowohl die beiden Phasen (a) und (b) gemeinsam enthalten oder sie enthält nur die erfindungsgemäße Öl-Phase (b), wobei die Wasser-Phase (a) dem Stand der Technik entsprechen kann.

Unter dem im Folgenden verwendeten Begriff "Fertigformulierung" wird sowohl die erfindungsgemäße Wasser-in-ÖI-Suspoemulsion, enthaltend eine Wasser-Phase (a) und die erfindungsgemäße Öl-Phase (b), wie auch die erfindungsgemäße Öl-Phase (b) als solche verstanden.

Als Komponente (a1) für die Wasser-Phase (a) können ein oder mehrere ionische Tenside ausgewählt werden und/oder kombiniert werden mit Vertretern aus der Gruppe Polycarboxylate, wie die Geropon^{®} Reihe von Rhodia, N-Alkyl-Tauride, vorzugweise N-(C₁-C₁₂)-Tauride, besonders bevorzugt N-Methyl-Tauride, wie Hostapon^{®} T von Clarinat, oder Ligninsulfonate, wie Vanisperse CB^{®} von Borrgaard oder Reax^{®} 85 von Westvaco, sowie Calciumdodecylbenzolsulfonate (siehe Komponente (b2)).

Als Komponente (a2) können Salze ausgewählt werden, wie Alkali- und Ammoniumcarbonate, -sulfate, -nitrate, -halogenide, -Hydrogencarbonate, - phosphate, beispielsweise Dikaliumhydrogenphosphat (K₂HPO₄), etc.

In der Wasser-Phase (a) der erfindungsgemäßen W/O Suspoemulsionen können zusätzlich Wirkstoffe (a3), z.B. wasserlösliche und/oder wasserunlösliche Wirkstoffe, Tenside (a4) und übliche Hilfs- und Zusatzstoffe (a5) (synonym: Hilfsmittel) wie Frostschutzmittel, Farbstoffe, Entschäumer, Dünger etc. enthalten sein.

Als Komponente (b1) bzw. (a3) können formuliert werden agrochemische Wirkstoffe, wobei der Begriff "agrochemische Wirkstoffe" alle Substanzen umfasst, die in den Bereichen Landwirtschaft, Gartenbau, Forstwirtschaft und Veterinärmedizin sowie im häuslichen Bereich und in der Vorratswirtschaft zum Einsatz kommen. Zu diesen agrochemischen Wirkstoffen in der erfindungsgemäßen W/O Suspoemulsion gehören beispielsweise Herbizide, Insektizide, Akarizide, Rodentizide, Fungizide, Bakterizide, Nematizide, Algizide, Molluskizide, Virizide, Safener, Resistenz induzierende, als Repellent wirksame oder wachstumsregulatorisch wirksame Substanzen, Wirkstoffe mit und aus biologischen Organismen, sowie Nährstoffe und Spurenelemente liefernde Düngemittel. Besonders bevorzugt sind herbizid, insektizid, akarizid, fungizid, bakterizid, virizid und wachstumsregulatorisch oder als Safener wirksame Substanzen, ganz besonders bevorzugt sind Herbizide, Insektizide, Fungizide und Safener, davon wiederum bevorzugt herbizide Wirkstoffe. Zu diesen bevorzugten Herbiziden gehören z.B. blattaktive Herbizide wie ALS-Inhibitoren (z.B. Sulfonamide wie Flucarbazone, Propoxycarbazone oder Amicarbazone oder Sulfonylharnstoffe wie Mesosulfuron, lodosulfuron, Amidosulfuron, Foramsulfuron), Diflufenican, Bromoxynilhaltige oder loxynilhaltige Produkte, Herbizide aus der Klasse der Oxyacetamide wie Flufenacet, Herbizide aus der Klasse der Aryloxy-Phenoxypropionate wie Fenoxaprop-p-ethyl, Rübenherbizide wie Desmedipham, Phenmedipham, Ethofumesate oder Metamitron, oder auch Wirkstoffe aus der Klasse der HPPD-Inhibitoren (z.B. Isoxaflutole, Sulcotrione, Mesotrione).

Sofern die Wirkstoffe ein oder mehrere asymetrische C-Atome oder auch Doppelbindungen enthalten, die nicht gesondert angegeben sind, sind doch sämtliche Isomeren umfaßt. Die durch ihre spezifische Raumform definierten möglichen Stereoisomeren, wie Enantiomere, Diastereoisomere, Z- und E-Isomere sind alle umfaßt und können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden. Die genannten Stereoisomeren in reiner Form als auch ihre Gemische können somit erfindungsgemäß eingesetzt werden.

In den unter Komponente (b1) bzw. (a3) enthaltenen Wirkstoffen sind im Sinne der vorliegenden Erfindung neben den neutralen Verbindungen stets auch deren Salze mit anorganischen und/oder organischen Gegenionen zu verstehen. So können beispielsweise Sulfonylharnstoffe z.B. Salze bilden, bei denen der Wasserstoff der -SO₂-NH-Grupp durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.

In den als Komponente (b1) bzw. (a3) enthaltenen Herbiziden sind zu nennen z.B. ALS-Inhibitoren (Acetolactat-Synthetase-Inhibitoren) oder von ALS-Inhibitoren verschiedene Herbizide, wie Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxyphenoxyalkancarbonsäure-Derivate, wie Chinolyloxy-, Chinoxalyl-oxy-, Pyridyloxy-, Benzoxazolyloxy- und Benzthiazolyloxyphenoxyalkan-carbonsäureester, Cyclohexandionabkömmlinge, Phosphor-haltige Herbizide, z.B. vom Glufosinate-Typ oder vom Glyphosate-Typ, sowie S-(N-Aryl-N-alkylcarbamoylmethyl)-dithiophosphorsäureester.

Bei den ALS-Inhibitoren handelt es sich insbesondere um Imidazolinone, Pyrimidinyloxy-pyridincarbonsäure-Derivate, Pyrimidyloxy-benzoesäure-Derivate, Triazolo-pyrimidin-sulfonamid-Derivate und um Sulfonamide, vorzugsweise aus der Gruppe der Sulfonylharnstoffe.

Bevorzugte ALS-Inhibitoren entstammen aus der Reihe der Sulfonylharnstoffe, z.B. Pyrimidin- oder Triazinylaminocarbonyl-[benzol-, pyridin-, pyrazol-, thiophen- und (alkylsulfonyl)-alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulfonyl)-alkylamino-Teil sind Alkyl, Alkoxy, Halogen wie F, Cl, Br oder J, Amino, Alkylamino, Dialkylamino, Acylamino wie Formylamino, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, Alkylsulfonylaminoalkyl, (Alkansulfonyl)alkylamino. Solche geeigneten Sulfonylharnstoffe sind beispielsweise
A1) Phenyl- und Benzylsulfonylharnstoffe und verwandte Verbindungen, z.B.
   1-(2-Chlorphenylsulfonyl)-3-(4-methoxy-6-methyl-1,3,5-triazin-2-yl)harnstoff (Chlorsulfuron),
   1-(2-Ethoxycarbonylphenylsulfonyl)-3-(4-chlor-6-methoxypyrimidin-2-yl)harnstoff (Chlorimuron-ethyl),
   1-(2-Methoxyphenylsulfonyl)-3-(4-methoxy-6-methyl-1,3,5-triazin-2-yl)harnstoff (Metsulfuron-methyl),
   1-(2-Chlorethoxyphenylsulfonyl)-3-(4-methoxy-6-methyl-1,3,5-triazin-2-yl)harnstoff (Triasulfuron),
   1-(2-Methoxycarbonylphenylsulfonyl)-3-(4,6-dimethylpyrimidin-2-yl)harnstoff (Sulfometuron-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxypyrimidin-2-yl)harnstoff (Bensulfuron-methyl),
   1-(2-Methoxycarbonylphenylsulfonyl)-3-(4,6-bis-(difluormethoxy)pyrimidin-2-yl)-harnstoff, (Primisulfuron-methyl),
   3-(4-Ethyl-6-methoxy-1,3,5-triazin-2-yl)-1-(2,3-dihydro-1,1-dioxo-2-methylbenzo-[b]thiophen-7-sulfonyl)harnstoff (EP-A 0 796 83),
   3-(4-Ethoxy-6-ethyl-1,3,5-triazin-2-yl)-1-(2,3-dihydro-1,1-dioxo-2-methylbenzo[b]-thiophen-7-sulfonyl)harnstoff (EP-A 0 079 683),
   3-(4-Methoxy-6-methyl-1,3,5-triazin-2-yl)-1-(2-methoxycarbonyl-5-jod-phenylsulfonyl)-harnstoff (lodosulfuron-methyl und dessen Salze wie das Natriumsalz, WO 92/13845),
   DPX-66037, Triflusulfuron-methyl (s. Brighton Crop Prot. Conf. - Weeds - 1995, S. 853),
   CGA-277476, (s. Brighton Crop Prot. Conf. - Weeds - 1995, S. 79),
   Methyl-2-[3-(4,6-dimethoxypyrimidin-2-yl)ureidosulfonyl]-4-methansulfon-amido-methyl-benzoat (Mesosulfuron-methyl und dessen Salze wie das Natriumsalz, WO 95/10507),
   N,N-Dimethyl-2-[3-(4,6-dimethoxypyrimidin-2-yl)ureidosulfonyl]-4-formylamino-benzamid (Foramsulfuron und dessen Salze wie das Natriumsalz, WO 95/01344);
A2) Thienylsulfonylharnstoffe, z.B.
   1-(2-Methoxycarbonylthiophen-3-yl)-3-(4-methoxy-6-methyl-1,3,5-triazin-2-yl)harnstoff (Thifensulfuron-methyl);
A3) Pyrazolylsulfonylharnstoffe, z.B.
   1-(4-Ethoxycarbonyl-1-methylpyrazol-5-yl-sulfonyl)-3-(4,6-dimethoxypyrimidin-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference'Weeds' 1991, Vol. 1, S. 45 ff.),
   DPX-A8947, Azimsulfuron, (s. Brighton Crop Prot. Conf. 'Weeds' 1995, S. 65);
A4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990));
A5) Pyridylsulfonylharnstoffe, z.B.
   1-(3-N,N-Dimethylaminocarbonylpyridin-2-ylsulfonyl)-3-(4,6-dimethoxypyrimidin-2-yl)harnstoff (Nicosulfuron),
   1-(3-Ethylsulfonylpyridin-2-ylsulfonyl)-3-(-(4,6-dimethoxypyrimidin-2-yl)harnstoff (Rimsulfuron),
   2-[3-(4,6-Dimethoxypyrimidin-2-yl)ureidosulfonyl]-6-trifluormethyl-3-pyridin-carbonsäuremethylester, Natriumsalz (DPX-KE 459, Flupyrsulfuron, s. Brighton Crop Prot. Conf. Weeds, 1995, S. 49), sowie Trifloxysulfuron und dessen Natriumsalz;
A6) Alkoxyphenoxysulfonylharnstoffe, wie sie z.B. in EP-A 0 342 569 beschrieben sind, vorzugsweise 3-(4,6-Dimethoxypyrimidin-2-yl)-1-(2-ethoxyphenoxy)-sulfonylharnstoff (Ethoxysulfuron) oder dessen Salze;
A7) Imidazolylsulfonylharnstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus.

Typische Vertreter dieser Wirkstoffe sind unter anderem die nachfolgend aufgeführten Verbindungen und deren Salze: Amidosulfuron, Azimsulfuron, Bensulfuron-methyl, Chlorimuron-Ethyl, Chlorsulfuron, Cinosulfuron, Cyclosulfamuron, Ethametsulfuron-methyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, Trifloxysulfuron und dessen Natriumsalz, lodosulfuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 1999)).

Die vorstehend aufgeführten Wirkstoffe sind z.B. bekannt aus "The Pesticide Manual", 12. Auflage (2000), The British Crop Protection Council oder den nach den einzelnen Wirkstoffen aufgeführten Literaturstellen.

Weitere geeignete ALS-Inhibitoren sind z.B.
B) Imidazolinone, z.B.
   2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
   5-Ethyl-2-(4-isopropyl-4-methyl-5-oxo-2-imidazolin-2-yl)-pyridin-3-carbonsäure (Imazethapyr),
   2-(4-Isopropyl-4-methyl-5-oxo-2-imidazolin-2-yl)-chinolin-3-carbonsäure (Imazaquin), 2-(4-Isopropyl-4-methyl-5-oxo-2-imidazolin-2-yl)-pyridin-3-carbonsäure (Imazapyr),
   5-Methyl-2-(4-isopropyl-4-methyl-5-oxo-2-imidazolin-2-yl)-pyridin-3-carbonsäure (Imazethamethapyr);
C) Triazolopyrimidinsulfonamid-Derivate, z.B.
   N-(2,6-Difluorphenyl)-7-methyl-1,2,4-triazolo[1,5-c]pyrimidin-2-sulfonamid (Flumetsulam),
   N-(2,6-Dichlor-3-methylphenyl)-5,7-dimethoxy-1,2,4-triazolo[1,5-c]pyrimidin-2-sulfonamid,
   N-(2,6-Difluorphenyl)-7-fluor-5-methoxy-1,2,4-triazolo[1,5-c]pyrimidin-2-sulfonamid,
   N-(2,6-Dichlor-3-methylphenyl)-7-chlor-5-methoxy-1,2,4-triazolo[1,5-c]pyrimidin-2-sulfonamid,
   N-(2-Chlor-6-methoxycarbonyl)-5,7-dimethyl-1,2,4-triazolo[1,5-c]pyrimidin-2-sulfonamid (EP-A 0 343 752, US-A 4,988,812);
D) Pyrimidinyloxy-pyridincarbonsäure- bzw. Pyrimidinyloxybenzoesäure-Derivate, z.B.
   3-(4,6-Dimethoxypyrimidin-2-yl)-oxy-pyridin-2-carbonsäurebenzyl-ester (EP-A 0 249 707),
   3-(4,6-Dimethoxypyrimidin-2-yl)-oxy-pyridin-2-carbonsäuremethylester (EP-A 0 249 707),
   2,6-Bis[(4,6-dimethoxypyrimidin-2-yl)-oxy]-benzoesäure (EP-A 0 321 846),
   2,6-Bis[(4,6-dimethoxypyrimidin-2-yl)-oxy]-benzoesäure-1-(ethoxycarbonyl-oxyethyl)-ester (EP-A 0 472 113).

Bei den unter Komponente (b1) bzw. (a3) enthaltenen von ALS-Inhibitoren verschiedenen herbiziden Wirkstoffen handelt es sich z.B. Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxyphenoxyalkancarbonsäure-Derivate, wie Chinolyloxy-, Chinoxalyl-oxy-, Pyridyloxy-, Benzoxazolyloxy- und Benzthiazolyloxyphenoxyalkan-carbonsäureester, Cyclohexandionabkömmlinge, sowie S-(N-Aryl-N-alkylcarbamoylmethyl)-dithiophosphorsäureester. Bevorzugt sind dabei Phenoxycarbonsäure-, Phenoxyphenoxy- und Heteroaryloxyphenoxy-carbonsäureester und -salze sowie Herbizide wie Bentazon, Cyanazin, Atrazin, Dicamba oder Hydroxybenzonitrile wie Bromoxynil und loxynil und deren Ester und andere Blattherbizide.

Geeignete von ALS-Inhibitoren verschiedene herbizide Wirkstoffe, die als Komponente (b1) bzw. (a3) enthalten sein können, sind beispielsweise:
E) Herbizide vom Typ der Phenoxyphenoxy- und Heteroaryloxyphenoxycarbonsäure-Derivate, wie
   E1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl), 2-(4-(4-Brom-2-chlorphenoxy)phenoxy)propionsäuremethylester (DE-A 26 01 548), 2-(4-(4-Brom-2-fluorphenoxy)phenoxy)propionsäuremethylester (US-A 4,808,750), 2-(4-(2-Chlor-4-trifluormethylphenoxy)phenoxy)propionsäuremethylester (DE-A 24 33 067),
      2-(4-(2-Fluor-4-trifluormethylphenoxy)phenoxy)propionsäuremethylester (US-A 4,808,750),
      2-(4-(2,4-Dichlorbenzyl)phenoxy)propionsäuremethylester (DE-A 24 17 487), 4-(4-(4-Trifluormethylphenoxy)phenoxy)pent-2-en-säureethylester, 2-(4-(4-Trifluormethylphenoxy)phenoxy)propionsäuremethylester (DE-A 24 33 067);
   E2) "Einkernige" Heteroaryloxyphenoxy-alkancarbonsäure-Derivate, z.B.
      2-(4-(3,5-Dichlorpyridyl-2-oxy)phenoxy)propionsäureethylester (EP-A 0 002 925),
      2-(4-(3,5-Dichlorpyridyl-2-oxy)phenoxy)propionsäurepropargylester (EP-A 0 003 114),
      2-(4-(3-Chlor-5-trifluormethyl-2-pyridyloxy)phenoxy)propionsäure-methylester (EP-A 0 003 890),
      2-(4-(3-Chlor-5-trifluormethyl-2-pyridyloxy)phenoxy)propionsäureethylester (EP-A 0 003 890),
      2-(4-(5-Chlor-3-fluor-2-pyridyloxy)phenoxy)propionsäurepropargylester (EP-A 0 191 736),
      2-(4-(5-Trifluormethyl-2-pyridyloxy)phenoxy)propionsäurebutylester (Fluazifop-butyl);
   E3) "Zweikernige" Heteroaryloxyphenoxy-alkancarbonsäure-Derivate, z.B.
      2-(4-(6-Chlor-2-chinoxalyloxy)phenoxy)propionsäuremethylester und -ethylester (Quizalofopmethyl und Quizalofopethyl),
      2-(4-(6-Fluor-2-chinoxalyloxy)phenoxy)propionsäuremethylester (s. J. Pest. Sci. Vol. 10,61 (1985)),
      2-(4-(6-Chlor-2-chinoxalyloxy)phenoxy)propionsäure-2-isopropylidenaminooxy-ethylester (Propaquizafop),
      2-(4-(6-Chlorbenzoxazol-2-yl-oxy)phenoxy)propionsäureethylester (Fenoxapropethyl), dessen D(+) Isomer (Fenoxaprop-P-ethyl) und 2-(4-(6-Chlorbenzthiazol-2-yloxy)phenoxy)propionsäureethylester (DE-A 26 40 730),
      2-(4-(6-Chlorchinoxalyloxy)phenoxy)propionsäure-tetrahydro-2-furylmethylester (EP-A 0 323 727);
   E4) Phenoxycarbonsäure-Derivate wie 2,4-D, 2,4-DP, 2,4-DB, CMPP und MCPA und deren Ester und Salze;
F) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
G) Thiocarbamate, z.B.
   S-Ethyl-N,N-dipropylthiocarbamat (EPTC),
   S-Ethyl-N,N-diisobutylthiocarbamat (Butylate);
H) Cyclohexandionoxime, z.B.
   3-(1-Allyloxyiminobutyl)-4-hydroxy-6,6-dimethyl-2-oxocyclohex-3-encarbon-säuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-5-(2-phenylthiopropyl)-3-hydroxy-cyclohex-2-en-1-on (Cloproxydim),
   2-(1-(3-Chlorallyloxy)iminobutyl)-5-(2-ethylthiopropyl)-3-hydroxy-cyclohex-2-en-1-on,
   2-(1-(3-Chlorallyloxy)iminopropyl)-5-(2-ethylthiopropyl)-3-hydroxy-cyclohex-2-en-1-on (Clethodim),
   2-(1-Ethoxyiminobutyl)-3-hydroxy-5-(thian-3-yl)-cyclohex-2-enon (Cycloxydim),
   2-(1-Ethoxyiminopropyl)-5-(2,4,6-trimethylphenyl)-3-hydroxy-cyclohex-2-en-1-on (Tralkoxydim);
I) Benzoylcyclohexandione, z.B.
   2-(2-Chlor-4-methylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634),
   2-(2-Nitro-4-methylsulfonylbenzoyl)-4,4-dimethylcyclohexan-1,3-dion (WO-A-91/13548, Mesotrione);
J) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
K) Alkylazine, z.B. wie beschrieben in WO-A 97/08156, WO-A-97/31904, DE-A-19826670, WO-A-98/15536, WO-A-8/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (I) 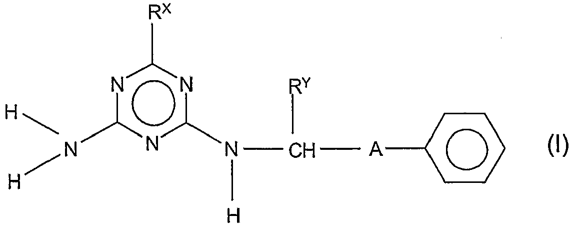 worin
   R^{X} (C₁-C₄)-Alkyl oder (C₁-C₄)-Haloalkyl,
   R^{Y} (C₁-C₄)-Alkyl, (C₃-C₆)-Cycloalkyl oder (C₃-C₆)-Cycloalkyl-(C₁-C₄)-Alkyl und
   A -CH₂-, -CH₂-CH₂-, -CH₂-CH₂-CH₂-, -O-, -CH₂₋CH₂-O-, -CH₂-CH₂-CH₂-O-bedeuten, besonders bevorzugt solche der Formel I1-I7

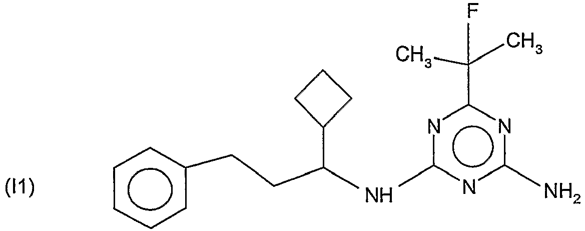

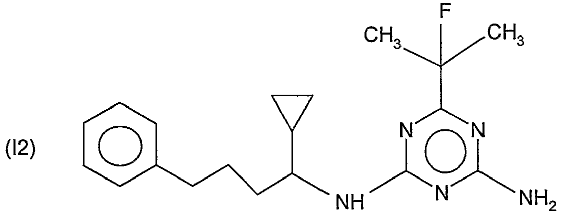

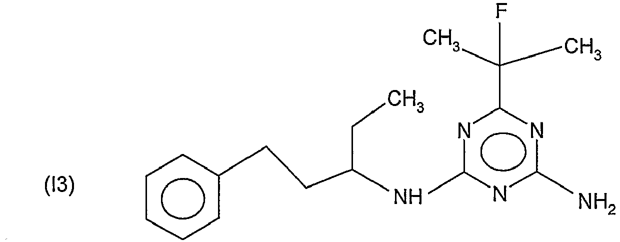

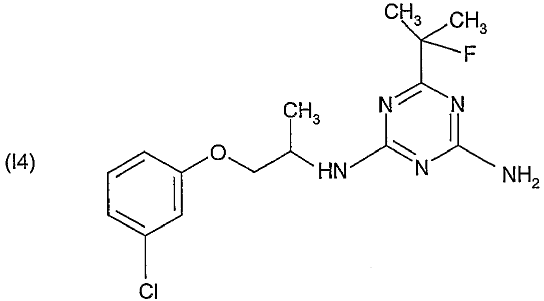

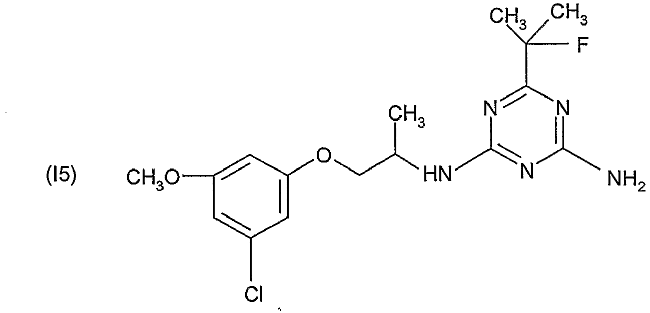

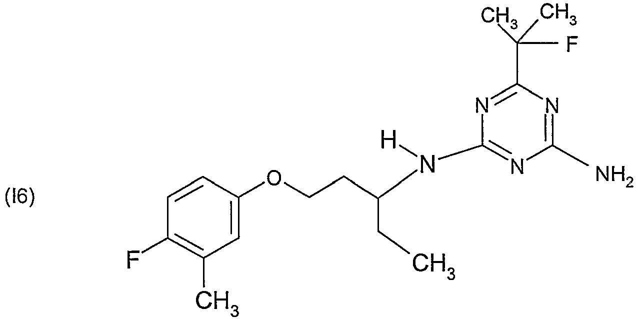

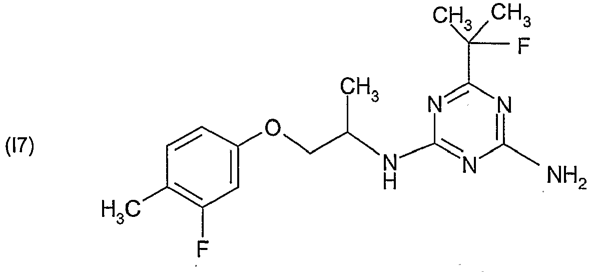

Die Herbizide der Gruppen B bis K sind beispielsweise aus den oben jeweils genannten Schriften und aus "The Pesticide Manual", 12. Auflage, 2000, The British Crop Protection Council, "Agricultural Chemicals Book II - Herbicides -", by W.T. Thompson, Thompson Publications, Fresno CA, USA 1990 und "Farm Chemicals Handbook '90", Meister Publishing Company, Willoughby OH, USA,1990, bekannt.

Bevorzugte Beispiele für die als Komponente (b1) bzw. (a3) enthaltenen Herbizide sind Verbindungen aus den Gruppen der (5-hydroxy-1,3-dimethyl-1H-pyrazol-4-yl)[2-(methylsulfonyl)-4-(trifluoromethyl)phenyl]methanone und N-[(1R,2S)-2,6-dimethyl-2,3-dihydro-1H-inden-1-yl]-6-[(1R)-1-fluoroethyl]-1,3,5-triazine-2,4-diamine, sowie deren andere optisch aktiven Alternativen; daneben Verbindungen aus den Gruppen der Sulfonylharnstoffe, Phenylharnstoffe wie z.B. Diuron, IPU, Linuron; HPPD Hemmer, Triketone, Safener, Phenoxyester, Diclofop, Fenoxaprop, Oxyacetamide wie z.B. Flufenacet, und Rübenherbizide wie z.B. Phenmedipham, Desmedipham und Metamitron, sowie Fluratom.

Hierbei können in der Wasser-Phase (a) kein, ein oder mehrere Wirkstoff(e) in gelöster und/oder dispergierter Form vorliegen, und in der Öl-Phase (b) ein oder mehrere Wirkstoff(e), umfassend auch die Gruppe der sogenannten "Safener", in gelöster und/oder dispergierter Form vorliegen, wobei vorzugsweise mindestens zwei Wirkstoffe in der W/O Suspoemulsion enthalten sind, von denen mindestens einer in dispergierter Form vorliegt.

Als Wirkstoffe für die Wasser-Phase (Komponente (a3)), können bevorzugt wasserlösliche Wirkstoffe, sowie wasserunlösliche Wirkstoffe, die in der Wasser-Phase dispergierbar sind, in Betracht kommen.

Von den agrochemischen Wirkstoffen, vorzugsweise aus der Gruppe der Herbizide, können beispielsweise solche aus den folgenden Gruppen in Betracht kommen: Salze von Phenylessig-, Phenylpripon-, Phenylbutter-bzw-isobuttersäurederivaten (auch optisch aktive Formen); Salze von Bromoxynil- bzw loxynilderivaten, Phenylharnstoffe wie z.B. Diuron, IPU, Linuron; Rübenherbiziden wie z.B. Phenmedipham, Desmedipham, Ethofumesate, Metamitron; Herbizide wie (5-hydroxy-1,3-dimethyl-1H-pyrazol-4-yl)[2-(methylsulfonyl)-4-(trifluoromethyl)phenyl]methanone und N-[(1R,2S)-2,6-dimethyl-2,3-dihydro-1H-inden-1-yl]-6-[(1R)-1-fluoroethyl]-1,3,5-triazine-2,4-diamine, sowie deren andere optisch aktiven Alternativen), Fluratom, Flufenacet oder solche, wasserunlösliche, die sich auch in der Öl-Phase (b) lösen können und/oder in der Wasser-Phase (a) dispergierbar sind.

Der Gesamtgehalt an Wirkstoffen in der Fertigformulierung beträgt 1-49 Gew.-% vorzugsweise 5-33 Gew.-%, und ganz besonders bevorzugt 6-28 Gew.-%.

Als Komponente (a4) kommen z.B. die folgenden Tenside in Betracht.

Tenside aus der Gruppe der anionischen bzw. nicht-ionischen Tenside, z.B. die nachfolgend aufgeführten, worin EO = Ethylenoxid-Einheiten, PO = Propylenoxid-Einheiten und BO = Butylenoxid-Einheiten bedeutet:
1) C₁-C₂₂-Alkohole, die alkoxyliert sein können, z.B. mit 1 - 60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-,Cycloalkyl-oder Acylrest mit 1-24 Kohlenstoffatomenendgruppenverschlossen sein. Beispiele für derartige Verbindungen sind:
   Genapol^{®}C-,L-,O-,T-,UD-,UDD-,X-Produkte von Clariant, Plurafac^{®}- und Lutensol^{®}A-,AT-,ON-,TO-Produkte von BASF, Marlipal^{®}24- und 013 Produkte von Condea, Dehypon^{®}-Produkte von Henkel, Ethylan^{®}-Produkte von Akzo-Nobel wie Ethylan CD 120.
2) Anionische Derivate der unter 1) beschriebenen Produkte in Form von Sulfonaten, Sulfaten und Phosphaten und deren anorganischen (z.B Alkali und Erdalkali) und organischen Salzen (z.B. auf Amin- oder Alkanolaminbasis) wie Genapol^{®}LRO, Sandopan®-Produkte, Hostaphat/Hordaphos^{®}-Produkte von Clariant.
   Copolymere bestehend aus EO, PO und/oder BO Einheiten wie zum Beispiel Blockcopolymere wie die Pluronic^{®}-Produkte von der BASF und die Synperonic^{®}-Produkte von Uniquema mit einem Molekulargewicht von 400 bis 10⁸.
   Alkylenoxydaddukte von C₁ - C₉ Alkoholen wie Atlox^{®}5000 von Uniquema oder Hoe^{®}-S3510 von Clariant.
3) Fettsäure- und Triglyceridalkoxylate wie die Serdox^{®}NOG-Produkte von Condea oder alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester wie Rapsölmethylester oder Rapsölethylester, beispielsweise die Emulsogen^{®}-Produkte von Clariant, Salze von aliphatischen, cycloaliphatischen und olefinischen Carbonsäuren und Polycarbonsäuren, sowie Alpha-Sulfofettsäureester wie von Henkel erhältlich.
4) Fettsäureamidalkoxylate wie die Comperlan^{®}-Produkte von Henkel oder die Amam^{®}-Produkte von Rhodia.
   Alkylenoxydaddukte von Alkindiolen wie die SurFynol^{®}-Produkte von Air Products. Zuckerderivate wie Amino- und Amidozucker von Clariant, Glukitole von Clariant, Alkylpolyglycoside in Form der APG^{®}-Produkte von Henkel oder wie Sorbitanester in Form der Span^{®}- oder Tween^{®}-Produkte von Uniquema oder Cyclodextrinester oder -ether von Wacker.
5) Oberflächenaktive Cellulose- und Algin-, Pektin- und Guarderivate wie die Tylose^{®}-Produkte von Clariant, die Manutex^{®}-Produkte von Kelco und Guarderivate von Cesalpina.
   Alkylenoxydaddukte auf Polyolbasis wie Polyglykol^{®}-Produkte von Clariant. Grenzflächenaktive Polyglyceride und deren Derivate von Clariant.
6) Sulfosuccinate, Alkansulfonate, Paraffin- und Olefinsulfonate wie Netzer IS^{®}, Hoe^{®}S1728, Hostapur^{®}OS, Hostapur^{®}SAS von Clariant, Triton^{®}GR7ME und GR5 von Union Carbide, Empimin^{®}-Produkte von Albright und Wilson, Marlon^{®}-PS65 von Condea.
7) Sulfosuccinamate wie die Aerosol^{®}-Produkte von Cytec oder die Empimin^{®}-Produkte von Albright und Wilson.
8) Alkylenoxidaddukte von Fettaminen, quartäre Ammonium-Verbindungen mit 8 bis 22 Kohlenstoffatomen (C₈-C₂₂) wie z.B. die Genamin^{®}C,L,O,T-Produkte von Clariant.
9) Oberflächenaktive Verbindungen auf Silikon- bzw Silanbasis wie die Tegopren^{®}-Produkte von Goldschmidt und die SE^{®}-Produkte von Wacker, sowie die Bevaloid^{®}-, Rhodorsil^{®}- und Silcolapse^{®}-Produkte von Rhodia (Dow Corning, Reliance, GE, Bayer).
10) Per- oder polyfluorierte oberflächenaktive Verbindungen wie Fluowet^{®}-Produkte von Clariant, die Bayowet^{®}-Produkte von Bayer, die Zonyl^{®}-Produkte von DuPont und Produkte dieser Art von Daikin und Asahi Glass.
11) Grenzflächenaktive Sulfonamide z.B. von Bayer.
12) Grenzflächenaktive Polyacryl- und Polymethacrylderivate wie die Sokalan^{®}-Produkte von der BASF.
13) Oberflächenaktive Polyamide wie modifizierte Gelatine oder derivatisierte Polyasparginsäure von Bayer und deren Derivate.
14) Tensidische Polyvinylverbindungen wie modifiziertes Polyvinylpyrollidon wie die Luviskol^{®}-Produkte von BASF und die Agrimer^{®}-Produkte von ISP oder die derivatisierten Polyvinylacetate wie die Mowilith^{®}-Produkte von Clariant oder die -butyrate wie die Lutonal^{®}-Produkte von der BASF, die Vinnapas^{®}- und die Ploloform^{®}-Produkte von Wacker oder modifizierten Polyvinylalkohole wie die Mowiol^{®}-Produkte von Clariant.
15) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer^{®}-VEMA-Produkte von ISP.
16) Oberfächenaktive Derivate von Montan-, Polyethylen-, und Polypropylenwachsen wie die Hoechst^{®}-wachse oder die Licowet^{®}-Produkte von Clariant.
17) Oberflächenaktive Phosphonate und Phosphinate wie Fluowet^{®}-PL von Clariant.
18) Poly- oder perhalogenierte Tenside wie beispielsweise Emulsogen^{®}-1557 von Clariant.
19) Phenole, die alkoxyliert sein können, beispielsweise Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 1 bis 4 C-Atome aufweist, vorzugsweise mit 3 bis 10 mol Alkylenoxid umgesetztes Phenol, (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Triisobutylphenol, - Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol.
20) Verbindungen, die formal die Umsetzungsprodukte der unter 20) beschriebenen Moleküle mit Schwefelsäure oder Phosphorsäure darstellen und deren mit geeigneten Basen neutralisierte Salze, beispielsweise der saure Phosphorsäureester des dreifach ethoxylierten Phenols, der saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
21) Benzolsulfonate wie Alkyl- oder Arylbenzolsulfonate, z.B. saure und mit geeigneten Basen neutralisierte (Poly)alkyl- und (Poly)aryl-benzolsulfonate, beispielsweise mit 1 bis 12 C-Atomen pro Alkylrest bzw. mit bis zu 3 Styroleinheiten im Polyarylrest, vorzugsweise (lineare) Dodecylbenzolsulfonsäure und deren öl-lösliche Salze wie beispielsweise das Calciumsalz oder das Isopropylammoniumsalz der Dodecylbenzolsulfonsäure.

Bei den Alkylenoxy-Einheiten sind Ethylenoxy- (EO), Propylenoxy- (PO) und Butylenoxy-Einheiten (BO), insbesondere Ethylenoxy-Einheiten bevorzugt.

Beispiele für bevorzugte Tenside sind solche aus der Gruppe der Tenside auf nichtaromatischer Basis, z.B. die Tenside der vorstehend genannten Gruppen 1) bis 18), vorzugsweise der Gruppen 1), 2), 6) und 8).

Beispiele für bevorzugte Tenside sind solche aus der Gruppe der Tenside auf aromatischer Basis, z.B. die Tenside der vorstehend genannten Gruppen 19) bis 21), vorzugsweise
mit 4 bis 10 mol Ethylenoxid umgesetztes Phenol, kommerziell beispielsweise in Form der Agrisol^{®}-Produkte (Akcros) erhältlich,
mit 4 bis 50 mol Ethylenoxid umgesetztes Triisobutylphenol, kommerziell beispielsweise in Form der Sapogenat^{®} T-Produkte (Clariant) erhältlich,
mit 4 bis 50 mol Ethylenoxid umgesetztes Nonylphenol, kommerziell beispielsweise in Form der Arkopal^{®}-Produkte (Clariant) erhältlich,
mit 4 bis 150 mol Ethylenoxid umgesetztes Tristyrylphenol, beispielsweise aus der Soprophor^{®}-Reihe wie Soprophor^{®} FL, Soprophor^{®} 3D33, Soprophor^{®} BSU, Soprophor^{®} 4D-384, Soprophor^{®} CY/8 (Rhodia), und
saures (lineares) Dodecylbenzolsulfonat, kommerziell beispielsweise in Form der Marlon^{®}-Produkte (Hüls) erhältlich.

In der Wasser-Phase kommen als Tenside (Komponente (a4)) z.B. solche auf anionischer und/oder nicht-ionischer Basis in Betracht. In der Öl-Phase können die Tenside (Komponente(b2)), anionischer oder nicht-ionischer Natur sein.

Die Öl-Phase (b) enthält als Komponente (b2) ein oder mehrere Tenside aus der Gruppe der alkoxylierten Tristyrylphenole, die z.B. ethoxyliert und/oder propoxyliert und /oder butoxyliert sein können, Calciumdodecylbenzolsulfonat oder der alkoxylierten C₁-C₂₂ Alkohole, linear und/oder verzweigt, vorzugsweise C₈-C₁₈ Alkohole, besonders bevorzugt C₁₀-C₁₄Alkohole (z.B. Isotridecylalkohol), die z.B. ethoxyliert und/oder propoxyliert und/oder butoxyliert sein können. Die vorgenannten Alkylenoxide, bevorzugt mono-, bi- und polyfunktionale Alkohole, können zusätzlich phosphatiert und/oder sulfatiert und/oder sulfoniert sein und mit Alkali oder Aminen neutralisiert sein. Der Anteil an Alkylenoxid-Einheiten (EO für ethoxyliert bzw. PO für propoxyliert bzw. BO für butoxyliert) kann zwischen 2-100 liegen, vorzugsweise 3-50 und besonders bevorzugt 4-30. Beispiele dafür sind Soprophor^{®} BSU, -4D384, - 3D33, -FL, - FL-K, -CY/8, -S 25, -S 40, -FL 60 von Rhodia, Hoe S 3474, Hoe S 3475, Hoe S 3775 bzw. die Genapol^{®} X Reihe von Clariant oder die Lutensol^{®} TO Typen von BASF oder die Ethylane^{®} von Akzo-Nobel.

Der Gesamtgehalt an Tensid kann in der Fertigformulierung 0,1-45 Gew.-% , vorzugsweise 0,8-25 Gew.-% und ganz besonders bevorzugt 1-20 Gew.-% betragen, wobei der Gehalt der Komponente (a1) 0,1-10 Gew.-%, vorzugsweise 0,5-5 Gew.-% beträgt und für die Komponente (b2) 0,1-20 Gew.-%, vorzugsweise 1,0-14 Gew.-% beträgt.

In der Öl-Phase (b) sind zusätzlich zu den Komponenten (b1) und (b2) organische Trägermedien (b3), z.B. Lösungsmittel auf aromatischer, heteroaromatischer und/oder nicht aromatischer Basis enthalten, sowie Verdickungsmittel (b4) und optional weitere Hilfsmittel (b5), wie Duft- und Farbstoffe, Entschäumer, Kristallisationsinhibitoren, Haftmittel.

In den organischen Trägermedien können die Wirkstoffe entweder gelöst und/oder dispergiert sein, wobei die organischen Trägermedienselbst nicht mit Wasser löslich sind.

Als organische Trägermedien für die Öl-Phase (Komponente (b3)), kommen in Betracht aromatische und heteroaromatische Lösungsmittel wie Acetophenon, Xylole, Toluol, Naphthaline, Cumole, Alkylbenzole, Substanzen der Solvesso^{®} Reihe von Exxon, Anisole, Ester von aromatischen Carbonsäuren (wie Benzoesäureester, Zimtsäureester, Alkyl-Phenyl-Carbonsäureester), Mesitylen, Pyridine etc. Weiterhin sind zu erwähnen nichtaromatische Trägermedien, wie Paraffine, Ketone, Säureamide, Amine, Lactame, Lactone, Säureanhydride, Carbonsäureester, Ether, Phophorester, cyclische Kohlenwasserstoffe (wie Cyclohexan, Decalin), Terpene, Alkohole (wie Iso-Octanol, Dodecanol, Decanol, Iso-Decanol) etc.

Der Gehalt an organischen Trägermedien in der gesamten Fertigformulierung bewegt sich zwischen 2-90 Gew.-%, bevorzugt 3-80 Gew.-%.

Als Verdickungsmittel für die Öl-Phase (Komponente (b4)), kommen z.B. in Frage:
1) modifizierte natürliche Silikate, wie chemisch modifizierte, z.B. hydrophobierte Bentonite, Hectorite, Attapulgite, Montmorillonite, Smektite oder andere Silikatmineralien, wie Bentone^{®} (Elementis, z.B. Bentone 27, 34, 38, SD1, SD2, EW), Attagel^{®} (Engelhard), Agsorb^{®} (Oil-Dri Corporation) oder Hectorite^{®} (Akzo Nobel)
2) synthetische Silikate, wie Silikate der Sipernat^{®}-, Aerosil^{®}- oder Durosil^{®}-Reihe (Degussa), der CAB-O-SIL^{®}-Reihe (Cabot) oder der Van Gel-Reihe (R.T. Vanderbilt),
3) Verdicker auf Basis synthetischer Polymere, wie Verdicker der Thixin^{®}- oder Thixatrol^{®}-Reihe (Elementis).
4) Verdicker auf Basis natürlicher Polymere und natürlicher Öle, z.B. aus der Thixin^{®}- oder Thixatrol^{®}-Reihe (Elementis).

Bevorzugte Verdickungsmittel sind z.B. modifizierte, z.B. hydrophobierte Schichtsilikate und Verdicker auf Basis synthetischer Polymere.

Soweit in den erfindungsgemäßen Wasser-in-Öl Suspoemulsionen Verdickungsmittel enthalten sind, beträgt deren Gewichtsanteil im allgemeinen 0,01-5 Gew.-%, insbesondere 0,1-3 Gew.-%.

Weiterhin können als Komponenten (b5) bzw. (a5) noch zusätzlich bis zu 20 Gew.-% in der gesamten Fertigformulierung übliche Hilfs- und Zusatzstoffe, enthalten sein, unter anderem handelsübliche Hilfsmittel, wie Netzmittel, Dispergiermittel, Entschäumer, Konservierungsmittel und Frostschutzmittel.

Als zusätzliche Netz- und Dispergiermittel kommen beispielsweise Tributylphenolpolyglykolether, wie die Sapogenat^{®} T-Marken (Hoechst) oder Nonylphenolpolyglykolether, wie die Arkopal^{®} N-Marken (Hoechst) in Betracht.

Geeignete Entschäumer sind beispielsweise solche auf Siliconbasis wie aus der Silcolapse^{®}-Reihe (Rhone Poulenc), SE 39 oder Antischaummittel SH (Wacker).

Wenn nötig, finden Konservierungsmittel, beispielsweise auf Formaldehyd-, Benzoesäure- und Triphenylzinn-Basis Verwendung, wie z.B. Kobate^{®} C.

Weiterhin können auch Frostschutzmittel, wie Harnstoff, Salze, besonders KaliumSalze der Phosphorsäure (KPO₄H₂, K₂PO₄H, K₃PO₄), Polyole (z. B. Glykol, Propylenglykol oder Glycerin) oder Zucker zugesetzt werden.

Die Öl-Phase (b), die als solche auch Gegenstand der Erfindung ist, enthaltend die Komponenten (b1), (b2), (b3), (b4) und gegebenenfalls (b5) gemäß obiger Definition, kann entweder direkt und/oder als so genannte "Zubereitung", wie beispielsweise als Spritzbrühe, welche erhältlich ist durch Verdünnen mit weiteren, hierfür geeigneten Flüssigkeiten, vorzugsweise Wasser, verdünnt angewendet werden.

Mit der erfindungsgemäßen Öl-Phase (b) als solcher lassen sich stabile Wirkstoff-Fertigformulierungen herstellen u.a. von Wirkstoffen, wie sie bereits als Komponenten (b1) bzw. (a3) zuvor genannt worden sind (u.a. aus den Bereichen Landwirtschaft/Agrochemie und Veterinärmedizin, wobei es sich um agrochemische Wirkstoffe handeln kann, wie z.B. herbizide, insektizide oder fungizide Wirkstoffe oder Safener).

Die erfindungsgemäßen Fertigformulierungen, womit sowohl die erfindungsgemäße Wasser-in-Öl-Suspoemulsion, bestehend aus Wasser-Phase (a) und spezieller Öl-Phase (b), wie auch auf die erfindungsgemäße Öl-Phase (b) als solche als gemeint sind, und hieraus erhältliche Zubereitungen (z.B. Spritzbrühen), welche durch Verdünnen mit weiteren, hierfür geeigneten Flüssigkeiten, vorzugsweise Wasser, erhältlich sind und die dann weiter verdünnt angewendet werden können, können beispielsweise zur Bekämpfung von unerwünschtem Pflanzenwuchs verwendet werden.

Speziell im Bereich der Agrochemie weisen die erfindungsgemäßen Fertigformulierungen und hieraus erhältliche Zubereitungen (z.B. Spritzbrühen) u.a. in Abhängigkeit vom Wirkstoff eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die Fertigformulierungen und deren herbizide Zubereitungen z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die Fertigformulierungen und deren Zubereitungen kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf Seiten der perennierenden Spezies Agropyron, Cynodon, Imperata sowie Sorghum und auch ausdauernde Cyperusarten gut erfasst. Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den Fertigformulierungen und deren Zubereitungen ebenfalls hervorragend bekämpft.

Werden die Fertigformulierungen und deren Zubereitungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Fertigformulierungen und deren Zubereitungen auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die Fertigformulierungen und deren Zubereitungen zeichnen sich durch eine schnell einsetzende und lang andauernde herbizide Wirkung aus. Die Regenfestigkeit der Wirkstoffe in den Fertigformulierungen und deren Zubereitungen ist in der Regel günstig. Als besonderer Vorteil fällt ins Gewicht, dass die in den Fertigformulierungen und deren Zubereitungen verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Fertigformulierungen und deren Zubereitungen hinsichtlich der beschriebenen Eigenschaften deutlich übertroffen.

Obgleich die Fertigformulierungen und deren Zubereitungen eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden Fertigformulierungen und deren Zubereitungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die entsprechenden Fertigformulierungen und deren Zubereitungen hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Des Weiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Fertigformulierungen und deren Zubereitungen auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der Fertigformulierungen und deren Zubereitungen in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die Fertigformulierungen und deren Zubereitungen in Nutzpflanzenkulturen eingesetzt werden, welche gegenüber den phytotoxischen Wirkungen der Herbizide resistent sind bzw. gentechnisch resistent gemacht worden sind.

Bei der Anwendung der Fertigformulierungen und deren Zubereitungen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Gegenstand der vorliegenden Erfindung ist somit auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen Fertigformulierungen, womit sowohl die erfindungsgemäße Wasser-in-Öl-Suspoemulsion, bestehend aus Wasser-Phase (a) und spezieller Öl-Phase (b), wie auch auf die erfindungsgemäße Öl-Phase (b) als solche als gemeint sind, und deren Zubereitungen auf die Schadpflanzen, Pflanzenteile, Pflanzensamen oder die Fläche auf der die Pflanzen wachsen, z.B. die Anbaufläche appliziert.

Die Herstellung der erfindungsgemäßen W/O Suspoemulsionen erfolgt z.B. durch Vorlage der Öl-Phase (b), in die die Wasser-Phase (a) eingemischt wird. Nach der Vermischung der Komponenten miteinander entsteht eine Suspoemulsion mit der Öl-Phase (b) als Trägerphase, während die Wasser-Phase (a) verteilt in Tröpfchen emulgiert ist, wobei der Anteil der Öl-Phase (b), wenn diese in Mischung vorliegt, 20-99 Gew.-%, bevorzugt 35-80 Gew.-% beträgt und der Anteil der Wasser-Phase (a) 1-80 Gew.-%, bevorzugt 20-65 Gew.-% beträgt. Dass es sich im vorliegenden Falle um eine W/O Suspoemulsion handelt, läßt sich mittels mikroskopischer Beobachtung und Leitfähigkeitsmessung feststellen.

Die Öl-Phase (b) wird durch Vorlegen des Trägermediums (b3), dann der entsprechenden Tenside (b2), Verdickungsmittel (b4), Hilfsmittel bzw. Zusatzstoffe (b5), und anschließender Zugabe der (des) Wirkstoffe(s) unter Rühren hergestellt, wobei sich die Komponenten vermischen. Bei zu dispergierenden Wirkstoffen wird das Gemisch beispielsweise einer Nassvermahlung zur Zerkleinerung der Wirkstoffpartikel unterworfen.

Bei der Herstellung der Wasser-Phase (a) wird in analoger Weise wie bei der Herstellung der Öl-Phase (b) vorgegangen, wobei die Komponenten ebenfalls vermischt werden und als Trägermedium Wasser verwendet wird.

Die Zubereitungen, wie beispielsweise Spritzbrühen, aus den erfindungsgemäßen Fertigformulierungen, womit sowohl die erfindungsgemäße Wasser-in-Öl-Suspoemulsion, bestehend aus Wasser-Phase (a) und spezieller Öl-Phase (b), wie auch auf die erfindungsgemäße Öl-Phase (b) als solche als gemeint sind, sind erhältlich durch Verdünnen mit weiteren, hierfür geeigneten Flüssigkeiten, vorzugsweise Wasser.

Die erfindungsgemäßen Wasser-in-Öl Suspoemulsionen sowie die in ihr enthaltene erfindungsgemäße Öl-Phase (b) sind vorteilhaft in Bezug auf höhere Wirkstoffkonzentrationen ("Beladungsdichte"), in der Verfügbarkeit einzelner Wirkstoffe in der Fertigformulierung sowie in einer erhöhten Lagerstabilität.

Insbesondere mit der erfindungsgemäßen Zusammensetzung in der Öl-Phase (b) und/oder Zubereitungen hieraus, lassen sich stabile Wirkstoff-Fertigformulierungen herstellen von Wirkstoffen (Komponente (b1)), z.B. solchen die in den Bereichen Landwirtschaft/Agrochemie und Veterinärmedizin eingesetzt werden können; mit jeweils guten biologischen und anwendungstechnischen Eigenschaften bei agrochemischen Wirkstoffen, wie z.B. herbiziden, insektiziden oder fungiziden Wirkstoffen.

Daneben entfällt für optional verwendete Wirkstoffe (Komponente (a3)), in der vorzugsweise genannten Wasser-Phase (a), beispielsweise salzartige, die in Wasser gelöst sind, der sehr aufwendige Vorgang des Vermahlens, wobei zugleich Separationen aufgrund zu hoher Dichteunterschiede vermieden werden.

### Beispiele

In den nachfolgenden Tabellen 1 und 2 sind Beispiele für erfindungsgemäße W/O Suspoemulsionen (Tabelle 1), wie auch für erfindungsgemäße Öl-Phasen (Tabelle 2) beschrieben, ohne dass die Erfindung darauf beschränkt wäre.

Tabelle 1 beschreibt erfindungsgemäße W/O Suspoemulsionen, zusammengesetzt aus verschiedenen erfindungsgemäßen Öl-Phasen (b) und verschiedenen WasserPhasen (a).

Tabelle 2 beschreibt die Zusammensetzung verschiedener erfindungsgemäßer Öl-Phasen.

**Tabelle 1: W/O Suspoemulsionen**

| Beispiel-Nr./Komponenten | | 1 | 2 | 3 | 4 | 5 | 6 | 7 | 8 | 9 | 10 | 11 |
|---|---|---|---|---|---|---|---|---|---|---|---|---|
| a | Wasser | 29 | 29 | 29 | 30,0 | 24,0 | 24,5 | 24,5 | 24,5 | 24, 5 | 24,5 | 24,5 |
| a1 | Geropon^{®} T/36 | 1 | 1 | | 1 | 1 | 1 | 1 | 1 | 1 | 1 | 1 |
| a1 | Geronol^{®} RP/7425 | | 3 | 3 | | | | | | | | |
| a2 | Ammoniumsulfat | 22 | 22 | 22 | 21,80 | 17,50 | 17,70 | 17,70 | 17,85 | | | |
| a2 | K₂HPO₄ | | | | | | | | | 17,70 | 17,70 | 17,85 |
| a3/b1 | Wirkstoff A (dispergiert) | 5,2 | 5,2 | 5,2 | 10,3 | 5,18 | 3,48 | 6,93 | 4,38 | 3,48 | 6,93 | 4,38 |
| b1 | Fenoxaprop-P | 4,2 | 4,2 | 4,2 | | 5,62 | 5,68 | 5,66 | 5,72 | 5,68 | 5,66 | 5,72 |
| b1 | Mefenpyr (Safener) | 1,7 | 1,7 | 1,7 | 1,14 | 2,10 | 2,12 | 2,31 | 2,13 | 2,12 | 2,31 | 2,13 |
| b2 | Soprophor^{®} 4D384 | 2 | | 4 | 2 | 2 | 2 | 2 | 2 | 2 | 2 | 2 |
| b2 | Calsogen^{®} AR 100 ND | | | | 3 | 3 | 3 | 3 | 3 | 3 | 3 | 3 |
| b2 | Emulsogen^{®} EL 400 | 3 | | | | | | | | | | |
| b2 | Genapol^{®} X 150 | 4 | 4 | | 4 | 4 | 4 | 4 | 4 | 4 | 4 | 4 |
| b2 | Genapol^{®} X 060 | | | 4 | | | | | | | | |
| b2 | Soprophor^{®} CY/8 | 3 | 3 | 3 | 3 | 3 | 3 | 3 | 3 | 3 | 3 | 3 |
| b2 | Soprophor^{®} BSU | | | 2 | | | | | | | | |
| b3 | Rüböl raffiniert | 2,5 | 2,5 | 3 | 2,5 | 2,5 | 2,5 | 2,5 | 2,5 | 2,5 | 2,5 | 2,5 |
| b4 | Bentone^{®} SD1 | 1 | 1 | 1 | 0,5 | 0,75 | 1 | 1 | 1 | 1 | 1 | 1 |
| b5 | Edenol^{®} D 81 | 2 | 2 | 2 | | 2 | 2 | 2 | 2 | 2 | 2 | 2 |
| b3 | Solvesso^{®} 200 ND | ad 100 | ad 100 | ad 100 | ad 100 | ad 100 | ad 100 | ad 100 | ad 100 | ad 100 | ad 100 | ad 100 |

Alle Angaben in Gew.-%
- Wirkstoff A:: (5-hydroxy-1,3-dimethyl-1H-pyrazol-4-yl)[2-(methylsulfonyl)-4-(trifluoromethyl)phenyl]methanone
- Geropon^{®} T/36:: Na-Polycarboxylat
- Geronol^{®} RP/7425:: Mix aus linearem Calciumdodecylbenzolsulfonat (CaDBS) + Tristyrilphenolethoxylat
- Soprophor^{®} 4D384:: Tristyrylphenol ethoxyliert + sulfatiert
- Calsogen^{®} AR 100 ND:: CaDBS in Solvesso ND
- Emulsogen^{®} EL 400:: Rhizinusöl mit 40 EO
- Genapol^{®} X 150:: Isotridecylalkohol mit 15 EO
- Genapol^{®} X 060:: Isotridecylalkohol mit 6 EO
- Soprophor^{®} CY/8:: Tristyrylphenol mit 20 EO
- Soprophor^{®} BSU:: Tristyrylphenol mit 16 EO
- Bentone^{®} SD1:: Alumoschichtsilikat
- Edenol^{®} D 81:: epoxidiertes Sojaöl
- Solvesso^{®} 200 ND:: Naphthalinfreies Aromatengemisch Siedepunkt > 120°C

**Tabelle 2: Öl-Phasen**

| Beispiel-Nr./Komponenten | | 1 | 2 | 3 | 4 | 5 | 6 | 7 |
|---|---|---|---|---|---|---|---|---|
| b1 | Fenoxaprop-P | 8,15 | | | 5,75 | 6,5 | | |
| b1 | Wirkstoff A (dispergiert) | 3,24 | 3,24 | 3,24 | 4,4 | 4,4 | 8 | 3,3 |
| b1 | Mefenpyr (Safener) | 3,06 | 0,84 | 0,84 | 2,2 | 1,4 | 2,5 | 0,9 |
| b1 | Bromoxyniloctanoate | 17,8 | 17,8 | 17,8 | 17 | | | 20 |
| b2 | Soprophor^{®} 4D384 | 2 | 2 | | 2 | 3 | 3 | 2 |
| b2 | Soprophor^{®} 3 D33 | | | 2 | | | | |
| b2 | Calsogen^{®} AR 100 ND | 3 | 3 | | 3 | 4 | 3 | 3,5 |
| b2 | Genapol^{®} X 150 | 4 | 4 | | 4 | 5 | 4 | 5,5 |
| b2 | Genapol^{®} X 060 | | | 6,5 | | | | |
| b2 | Soprophor^{®} CY/8 | 3 | 3 | 3 | 3 | 3 | 3 | 3 |
| b2 | Soprophor^{®} BSU | | | 2 | | | | |
| b3 | Rüböl raffiniert | 2,5 | 2,5 | 2,5 | 3 | 21 | 25 | 10 |
| b4 | Bentone^{®} SD1 | 2 | 2 | 1 | 1 | 1,8 | 2 | 1,1 |
| b5 | Edenol^{®} D 81 | 2 | 2 | 2 | 3 | 3 | 2 | 1,2 |
| b3 | Solvesso^{®} 200 ND | ad 100 | ad 100 | ad 100 | ad 100 | ad 100 | ad 100 | ad 100 |

Alle Angaben in Gew.-%
- Wirkstoff A:: (5-hydroxy-1,3-dimethyl-1H-pyrazol-4-yl)[2-(methylsulfonyl)-4-(trifluoromethyl)phenyl]methanone
- Soprophor^{®} 4D384:: Tristyrylphenol ethoxyliert + sulfatiert
- Soprophor^{®} 3 D33:: Tristyrylphenol ethoxyliert + phosphatiert
- Calsogen^{®} AR 100 ND:: CaDBS mit Solesso ND
- Genapol^{®} X 150:: Isotridecylalkohol mit 15 EO
- Genapol^{®} X 060:: Isotridecylalkohol mit 6 EO
- Soprophor^{®} CY/8:: Tristyrylphenol mit 20 EO
- Soprophor^{®} BSU:: Tristyrylphenol mit 16 EO
- Bentone^{®} SD1:: Alumoschichtsilikat
- Edenol^{®} D 81:: epoxidiertes Sojaöl
- Solvesso^{®} 200 ND:: Naphthalinfreies Aromatengemisch Siedepunkt > 120°C

## Patentansprüche

1. Wasser-in-Öl-Suspoemulsion, enthaltend
(a) eine Wasser-Phase
worin die Wasser-Phase (a), neben Wasser, die Komponenten
(a1) ein oder mehrere ionische Tenside aus der Gruppe Polycarboxylate,
(a2) ein oder mehrere Salze ausgewählt aus Alkali- und Ammoniumcarbonate, -sulfate, -nitrate, -halogenide, -Hydrogencarbonate, - phosphate,
(a3) gegebenenfalls einen oder mehrere agrochemische Wirkstoffe enthält, und
(b) eine Öl-Phase, enthaltend die Komponenten
(b1) einen oder mehrere agrochemische Wirkstoffe,
(b2) ein oder mehrere Tenside aus der Gruppe der alkoxylierten Tristyrylphenole, Calciumdodecylbenzolsulfonat und der alkoxylierten C₁-C₂₂ Alkohole, linear und/oder verzweigt,
(b3) ein oder mehrere organische Trägermedien,
(b4) ein oder mehrere Verdickungsmittel aus der Gruppe modifizierter natürlicher Silikate und synthetischer Silikate, sowie auf Basis synthetischer Polymere, natürlicher Polymere und natürlicher Öle,
- worin mindestens zwei Wirkstoffe enthalten sind, von denen mindestens einer in dispergierter Form vorliegt,
- worin die Öl-Phase (b) als Trägerphase dient, während die Wasser-Phase (a) verteilt in Tröpfchen emulgiert ist, wobei der Anteil der Öl-Phase (b) 35-80 Gew.-% beträgt und der Anteil der Wasser-Phase (a) 20-65 Gew.-% beträgt und
- worin als Komponenten (a3) und/oder (b1) agrochemische Wirkstoffe enthalten sind aus der Gruppe der Herbizide, z.B. Salze von Phenylessig-, Phenylpripon-, Phenylbutter- bzw-isobuttersäurederivaten, einschließlich optisch aktiver Formen; Salze von Bromoxynil- bzw loxynilderivaten, Phenylharnstoffe wie z.B. Diuron, IPU, Linuron; Rübenherbizide wie Phenmedipham, Desmedipham, Ethofumesate, Metamitron; (5-hydroxy-1,3-dimethyl-1H-pyrazol-4-yl)[2-(methylsulfonyl)-4-(trifluoromethyl)phenyl]methanone, N-[(1R,2S)-2,6-dimethyl-2,3-dihydro-1H-inden-1-yl]-6-[(1R)-1-fluoroethyl]-1,3,5-triazine-2,4-diamine, einschließlich deren optisch aktive Alternativen, Fluratom, Flufenacet.

2. Wasser-in-Öl-Suspoemulsion gemäß Anspruch 1, zusätzlich enthaltend in der Wasser-Phase (a) weitere Tenside (Komponente (a4)), die von Komponente (a1) verschieden sind.

3. Wasser-in-Öl-Suspoemulsion gemäß Anspruch 1, zusätzlich enthaltend in der Wasser-Phase (a) übliche Hilfs- und Zusatzstoffe (Komponente (a5)).

4. Wasser-in-Öl-Suspoemulsion gemäß Anspruch 1 zusätzlich enthaltend in der Öl-Phase (b) weitere Hilfsmittel (Komponente (b5)), wie Duft- und Farbstoffe, Entschäumer, Kristallisationsinhibitoren, Haftmittel.

5. Wasser-in-Öl-Suspoemulsion gemäß Anspruch 1, worin als Komponente (a3) enthalten sind wasserlösliche Wirkstoffe und/oder wasserunlösliche Wirkstoffe, die in der Wasser-Phase (a) dispergierbar sind.

6. Verfahren zur Herstellung einer Wasser-in-Öl-Suspoemulsion gemäß Anspruch 1, wobei man die Komponenten miteinander vermischt.

7. Zubereitung, erhältlich durch Verdünnen einer Wasser-in-Öl-Suspoemulsion gemäß 1 mit Wasser.

8. Verfahren zur Herstellung einer Zubereitung, wobei man die Wasser-in-ÖI-Suspoemulsion gemäß Anspruch 1, mit Wasser verdünnt.

9. Verwendung einer Wasser-in-Öl-Suspoemulsion gemäß Anspruch 1 und/oder einer Zubereitung gemäß Anspruch 7 zur Bekämpfung von unerwünschtem Pflanzenwuchs.

## Claims

1. A water-in-oil suspoemulsion comprising
(a) a water phase
wherein the water phase (a), in addition to water, comprises the components
(a1) one or more ionic surfactants from the group consisting of the polycarboxylates,
(a2) one or more salts selected from alkali metal and ammonium carbonates, sulfates, nitrates, halides, hydrogencarbonates, phosphates,
(a3) if appropriate, one or more agrochemical active substances,
and
(b) an oil phase comprising the components
(b1) one or more agrochemical active substances,
(b2) one or more surfactants from the group of the alkoxylated tristyryl phenols, calcium dodecylbenzenesulfonate and the alkoxylated C₁-C₂₂-alcohols, linear and/or branched,
(b3) one or more organic carrier media,
(b4) one or more thickeners from the group of the modified natural silicates and synthetic silicates, and on the basis of synthetic polymers, natural polymers and natural oils,
- which comprises at least two active substances, at least one of which is present in dispersed form,
- wherein the oil phase (b) acts as the carrier phase while the water phase (a) is emulsified in the form of distributed droplets, the amount of the oil phase (b) being 35-80% by weight and the amount of the water phase (a) being 20-65% by weight.
- wherein agrochemical active substances from the group of the herbicides, for example salts of phenylacetic, phenylpropionic, phenylbutyric or isobutyric acid derivatives, including optically active forms; salts of bromoxynil derivatives or ioxynil derivatives, phenylureas such as, for example, diuron, IPU, linuron; beet herbicides such as phenmedipham, desmedipham, ethofumesate, metamitron; (5-hydroxy-1,3-dimethyl-1H-pyrazol-4-yl)[2-(methylsulfonyl)-4-(trifluoromethyl)phenyl]methanone, N-[(1R,2S)-2,6-dimethyl-2,3-dihydro-1H-inden-1-yl]-6-[(1R)-1-fluoroethyl]-1,3,5-triazine-2,4-diamine, including their optically active alternatives, fluratom, flufenacet are present as components (a3) and/or (b1).

2. The water-in-oil suspoemulsion as claimed in claim 1, additionally comprising in the water phase (a) further surfactants (component (a4)), which differ from component (a1).

3. The water-in-oil suspoemulsion as claimed in claim 1, additionally comprising in the water phase (a) customary auxiliaries and additives (component (a5)).

4. The water-in-oil suspoemulsion as claimed in claim 1, additionally comprising, in the oil phase (b), further adjuvants (component (b5)) such as scents, colorants, antifoams, crystallization inhibitors or adhesives.

5. The water-in-oil suspoemulsion as claimed in claim 1, wherein water-soluble active substances and/or active substances which are insoluble in water, which are dispersible in the water phase (a), are present as component (a3).

6. A process for the preparation of a water-in-oil suspoemulsion according to claim 1, wherein the components are mixed with one another.

7. A preparation, obtainable by dilution of a water-in-oil suspoemulsion as claimed in 1 with water.

8. A process for preparing a preparation, wherein the water-in-oil suspoemulsion as claimed in claim 1 is diluted with water.

9. The use of a water-in-oil suspoemulsion as claimed in claim 1 and/or of a preparation as claimed in claim 7 for controlling undesired vegetation.

## Revendications

1. Suspo-émulsion eau dans huile, contenant :
(a) une phase aqueuse,
la phase aqueuse (a) contenant, outre de l'eau, les composants
(a1) un ou plusieurs tensioactifs ioniques du groupe des polycarboxylates,
(a2) un ou plusieurs sels choisis parmi les carbonates, sulfates, nitrates, halogénures, hydrogénocarbonates, phosphates alcalins et d'ammonium,
(a3) éventuellement un ou plusieurs agents actifs agrochimiques,
et
(b) une phase huileuse, contenant les composants :
(b1) un ou plusieurs agents actifs agrochimiques,
(b2) un ou plusieurs tensioactifs du groupe constitué par les tristyrylphénols alcoxylés, le dodécylbenzènesulfonate de calcium et les alcools en C₁-C₂₂ alcoxylés, linéaires et/ou ramifiés,
(b3) un ou plusieurs matériaux supports organiques,
(b4) un ou plusieurs épaississants du groupe constitué par les silicates naturels modifiés et les silicates synthétiques, ainsi qu'à base de polymères synthétiques, de polymères naturels et d'huiles naturelles,
- au moins deux agents actifs étant contenus, parmi lesquels au moins un se présente sous forme dispersée,
- la phase huileuse (b) servant de phase support, tandis que la phase aqueuse (a) est émulsifiée dispersée en gouttelettes, la proportion de la phase huileuse (b) étant de 35 à 80 % en poids et la proportion de la phase aqueuse (a) étant de 20 à 65 % en poids, et
- des agents actifs agrochimiques étant contenus en tant que composants (a3) et/ou (b1), du groupe des herbicides, p. ex. les sels de dérivés de l'acide phénylacétique, phénylpriponique, phénylbutyrique ou - isobutyrique, y compris les formes optiquement actives ; les sels de dérivés de bromoxynile ou d'ioxynile, les phénylurées telles que p. ex. le diuron, l'IPU, le linuron ; les herbicides pour betteraves, tels que le phenmédipham, le desmédipham, l'éthofumésate, le métamitron ; la (5-hydroxy-1,3-diméthyl-1H-pyrazol-4-yl)[2-(méthylsulfonyl)-4-(trifluorométhyl)phényl]méthanone, la N-[(1R,2S)-2,6-diméthyl-2,3-dihydro-1H-indén-1-yl]-6-[(1R)-1-fluoroéthyl]-1,3,5-triazine-2,4-diamine, y compris leurs variantes optiquement actives, le fluratom, le flufénacet.

2. Suspo-émulsion eau dans huile selon la revendication 1, contenant en outre dans la phase aqueuse (a) d'autres tensioactifs (composant (a4)), qui sont différents du composant (a1).

3. Suspo-émulsion eau dans huile selon la revendication 1, contenant en outre dans la phase aqueuse (a) des adjuvants et additifs usuels (composant (a5)).

4. Suspo-émulsion eau dans huile selon la revendication 1, contenant en outre dans la phase huileuse (b) des adjuvants supplémentaires (composant (b5)), tels que des parfums et des colorants, des antimousses, des inhibiteurs de cristallisation, des agents d'adhésivité.

5. Suspo-émulsion eau dans huile selon la revendication 1, dans laquelle des agents actifs solubles dans l'eau et/ou des agents actifs insolubles dans l'eau, qui sont dispersibles dans la phase aqueuse (a), sont contenus en tant que composant (a3).

6. Procédé de fabrication d'une suspo-émulsion eau dans huile selon la revendication 1, dans lequel les composants sont mélangés les uns avec les autres.

7. Préparation, pouvant être obtenue par dilution d'une suspo-émulsion eau dans huile selon 1 avec de l'eau.

8. Procédé de fabrication d'une préparation, dans lequel la suspo-émulsion eau dans huile selon la revendication 1 est diluée avec de l'eau.

9. Utilisation d'une suspo-émulsion eau dans huile selon la revendication 1 et/ou d'une préparation selon la revendication 7 pour lutter contre une végétation indésirable.
